# EUROPÄISCHE PATENTSCHRIFT

(11) **EP 1 354 775 B1**
(45) Veröffentlichungstag und Bekanntmachung des Hinweises auf die Patenterteilung: **19.07.2006**
(21) Anmeldenummer: 02024637.7
(22) Anmeldetag: 05.11.2002
(51) Int. Cl.: B60R 22/20

(54) **Gurthöhenverstellteil**
Height adjustable safety belt part
Pièce de ceinture de sécurité ajustable en hauteur

(30) Priorität: 12.04.2002 DE 10216107
(43) Veröffentlichungstag der Anmeldung: 22.10.2003
(73) Patentinhaber: KENDRION RSL GmbH & Co.KG, 57368 Lennestadt (DE)
(72) Erfinder: Middel, Dietmar, 57462 Olpe (DE); Schauerte, Andre, 57368 Lennestadt (DE); Lohmann, Horst, 59846 Sundern (DE)
(74) Vertreter: Köchling, Conrad-Joachim

(56) Entgegenhaltungen:
- DE-A1- 3 523 422
- DE-A1- 3 707 956

## Beschreibung

Die Erfindung betrifft eine Kombination aus Gurthöhenverstellteil und Gurtstraffer für Sicherheitsgurte für Kraftfahrzeuge, bestehend aus einer karosserieseitig befestigbaren Führungsschiene, die vorzugsweise C-förmigen Querschnitt aufweist, einem schlittenartig entlang der Schiene rastend verstellbaren Verstellteil und mit einem außen an der Schiene, deren Längsschlitz teilweise überdeckend angeordneten Schlittenoberteil, sowie einer am Verstellteil fixierten Halterung für eine Umlenköse für einen Sicherheitsgurt, wobei am Verstellteil ein Riegel schwenkbar gehaltert ist, der mittels eines am Schlittenoberteil gehalterten Betätigungsteils entgegen der Kraft einer am Schlittenoberteil gehalterten Betätigungsfeder aus der Verriegelungslage, in der der Riegel an einem Rastzahn der Führungsschiene anliegt, in eine Verstelllage verschwenkbar ist, in der der Riegel außer Eingriff vom Rastzahn ist, und wobei der Sicherheitsgurt mittels des Gurtstraffers im Crash-Fall stramm gezogen wird.

Ein solches Verstellteil ist beispielsweise aus der DE 201 07 331 U 1 bekannt. Bei einem gattungsgemäßen Verstellteil ist eine im Querschnitt vorzugsweise C-förmige oder U-förmige Führungsschiene vorgesehen, die in Montagesolllage im Wesentlichen in vertikaler Ausrichtung an einer entsprechenden Karosseriekontur, beispielsweise an der B-Säule befestigt wird. An dieser Führungsschiene ist das eigentliche Verstellteil gehaltert, welches aus dem rastend verstellbaren Verstellteil und dem Schlittenoberteil besteht. Am Verstellteil ist eine Halterung für eine Umlenköse für einen Sicherheitsgurt angeordnet, wobei die Halterung beispielsweise aus einer Bundmutter besteht, in die eine Schraube eingeschraubt werden kann, die die Umlenköse des Gurtes haltert. Am Schlittenoberteil ist ein Betätigungsteil angeordnet, mittels dessen ein Riegel, der schwenkbar am Verstellteil gehaltert ist, betätigbar ist. Die Betätigung des Riegels erfolgt entgegen der Kraft einer Betätigungsfeder. Bei der Auslegung von solchen Gurthöhenverstellern sorgt die Betätigungsfeder dafür, dass bei normaler Betätigung der Riegel des Verstellteiles in eine Verrastung der Führungsschiene einriegelt. Für die Auslegung ist dabei eine Federkraft wichtig, die den Ansprüchen der Kunden im Hinblick auf den Komfort entspricht, wobei sowohl eine leichte Entriegelung als auch eine sichere Verriegelung gewährleistet sein soll. Im Gegensatz zu diesen Forderungen steht der so genannte Straffertest. Der Sicherheitsgurt ist dabei mit einem Gurtstraffer kombiniert. Bei einem Crash zündet die Straffvorrichtung und erzeugt durch zum Beispiel eine pyrotechnische Treibladung in wenigen Millisekunden eine hohe Zuglast im Sicherheitsgurt, die vom Gurthöhenversteller auf jeden Fall sicher aufgenommen werden muss. Um die Verriegelung für den Gurthöhenversteller auch bei ungünstigen Bedingungen sicherzustellen, wenn nämlich beispielsweise der Riegel zwischen zwei Rasten steht und der Gurthöhenversteller somit nicht vollständig verriegelt ist, wird eine hohe Federkraft benötigt, die auf den Riegel einwirken muss, um bei den hohen Beschleunigungen mittels des Gurtstraffers eine entsprechend schnelle Verriegelung zu erreichen.

Aus der DE 35 23 422 A1, die den Oberbegriff des Anspruchs 1 entspricht, ist eine Vorrichtung zur Verstellung eines Anlenkpunktes eines Sicherheitsgurtes an einem Teil der Fahrzeugkarosserie gezeigt, bei der das Betätigungselement plattenförmig ausgebildet ist und im Abstand von dem Auslöseteil angeordnete, seitliche Lagervorsprünge aufweist, die in Aussparungen der Seitenwände des Führungsteils zur Lagerung um eine senkrecht zur Verstellrichtung sowie parallel zur Schwenkachse der Sperrklinke angeordnete Schwenkachse eingreifen.

Ausgehend von diesem Stand der Technik liegt der Erfindung eine Aufgabe zugrunde, eine Kombination aus einem Gurthöhenverstellteil und Gurtstraffer zu schaffen, welches einerseits eine komfortable leichte Betätigung gewährleistet und andererseits auch eine sichere Einriegelung bei Auslösung der Gurtstraffervorrichtung gewährleistet.

Zur Lösung dieser Aufgabe wird vorgeschlagen, dass am Schlittenoberteil eine Strafferfeder in vorgespannter Lage gehalten ist, die bei aktiviertem Gurtstraffer freigegeben ist und die Wirkung der Betätigungsfeder unterstützend sich am Riegel abstützt.

Die zusätzliche Strafferfeder ist bei Normalgebrauchsstellung des Gurthöhenverstellteiles in vorgespannter Lage gehalten, ohne dass sie auf den Riegel einwirkt. Lediglich dann, wenn die Gurtstraffungsvorrichtung aktiviert ist und auslöst, wird die Strafferfeder freigegeben, so dass sie sich zusätzlich zur Betätigungsfeder unterstützend am Riegel abstützt. Es ist bei Normalbetätigung dieses Gurthöhenverstellteils vom Benutzer lediglich die Kraft der Betätigungsfeder zu überwinden, so dass eine leichtgängige Betätigung erreicht ist. Andererseits ist aber auch sichergestellt, dass eine sichere Verriegelung bei Aktivierung der Gurtstraffungsvorrichtung erreicht wird, weil dann die Strafferfeder freigegeben ist und sich zusätzlich am Riegel abstützt und diesen unter zusätzlicher Federkraft in die Verriegelungslage drängt.

Eine besonders bevorzugte Weiterbildung wird darin gesehen, dass die Strafferfeder durch eine vom aktivierten Gurtstraffer ausgelöste Verschiebebewegung des Verstellteils auslösbar ist.

Bei dieser Ausbildung wird die Beschleunigung des Verstellteiles beziehungsweise die daraus resultierende Trägheitskraft am Schlittenoberteil ausgenutzt, um einen Mechanismus zur sicheren Verriegelung des Riegels in der Führungsschiene zu aktivieren.

Eine besonders bevorzugte Weiterbildung wird darin gesehen, dass die Betätigungsfeder aus einer etwa U-förmigen Blattfeder besteht, deren freie Schenkelenden zur Halterung für die Umlenköse gerichtet sind und deren Basis entgegen der Wirkrichtung des Gurtstraffers zum Betätigungsteil gerichtet ist, wobei deren erster Schenkel sich an Bestandteilen des Schlittenoberteils abstützt oder daran befestigt ist und deren zweiter Schenkel sich an dem Riegel abstützt, und wobei der erste Schenkel eine Verlängerung aufweist, die zum Boden der Führungsschiene hin zielend gerichtet ist und in einen Schlitz des Verstellteils eingreift, der Mitnehmer für die Verlängerung aufweist, dass die Strafferfeder ein Federelement ist, das zwischen den Schenkeln der Betätigungsfeder angeordnet ist und sich mit einem ersten Endteil an dem ersten Schenkel der Betätigungsfeder abstützt oder daran befestigt ist, und mit einem zweiten Endteil in eine Ausnehmung der Verlängerung des ersten Schenkels der Betätigungsfeder eingreift, und so vorgespannt gehalten ist, und dass das Verstellteil samt Halterung für die Umlenköse relativ zum Schlittenoberteil in Wirkrichtung des Gurtstraffers um ein solches Maß verschieblich ist, dass bei aktiviertem Gurtstraffer die Mitnehmer des Verstellteiles die Verlängerung des ersten Schenkels in eine Lage überführen, in der das zweite Endteil der Strafferfeder von der Ausnehmung der Verlängerung des ersten Schenkels der Betätigungsfeder freigegeben ist und sich an dem Riegel oder an dem am Riegel sich abstützenden zweiten Schenkel der Betätigungsfeder unter Federlast abstützt.

Dabei kann vorgesehen sein, dass die Strafferfeder eine U-förmige Blattfeder ist, die in gleicher Ausrichtung wie die Betätigungsfeder zwischen deren Schenkeln angeordnet ist.

Alternativ kann vorgesehen sein, dass die Strafferfeder eine Schenkelfeder ist.

Ein bevorzugtes Ausführungsbeispiel der Erfindung ist in der Zeichnung dargestellt und im folgenden näher beschrieben. Es zeigt.
- Figur 1: ein erfindungsgemäßes Gurthöhenverstellteil im Längsschnitt gesehen;
- Figur 2: eine Einzelheit der Figur 1 in vergrößerter Darstellung und in anderer Funktionslage;
- Figur 3 und 4: ein Federelement der Erfindung in Seitenansicht und in isometrischer Darstellung;
- Figur 5: eine Variante in der Ansicht gemäß Figur 4 gesehen.

Gemäß der Erfindung ist ein Gurthöhenverstellteil für Sicherheitsgurte für Kraftfahrzeuge vorgesehen. Es besteht aus einer karosserieseitig befestigbaren Führungsschiene 1, die vorzugsweise C-förmigen Querschnitt aufweist und an ihrer Basis Rasten 2 aufweist. Diese Führungsschiene 1 ist im Regelfall vertikal ausgerichtet an einer Karosserie befestigt, wobei der von der Führungsschiene 1 freigelassene Führungsschlitz zum Innenraum des Fahrzeuges hinweist. Ferner ist ein entlang der Führungsschiene 1 schlittenartig rastend verstellbares Verstellteil 3 mit einem außen an der Schiene 1, deren Längsschlitz mindestens teilweise überdeckend angeordneten Schlittenoberteil 4 vorgesehen. Am Verstellteil 3 ist eine Halterung 5 für eine Umlenköse für einen Sicherheitsgurt angeordnet, wobei im Ausführungsbeispiel die Halterung 5 aus einer Bundmutter besteht. Am Verstellteil 3 ist ein Riegel 6 schwenkbar gehaltert. Der Drehpunkt für den Riegel 6 ist bei 7 angegeben. Der Riegel ist in durchgezogenen Linien in der Verriegelungsposition und in gestrichelten Linien in der Freigabeposition gezeigt. Der Riegel 6 ist mittels eines am Schlittenoberteil 4 angeordneten Betätigungsteiles 8 entgegen der Kraft einer am Schlittenoberteil 4 gehalterten Betätigungsfeder 9 aus der Verriegelungslage, die in durchgezogenen Linien gezeigt ist, in der der Riegel 6 an einem Rastzahn 2 der Führungsschiene 1 anliegt, in eine Verstelllage, die in gestrichelten Linien gezeigt ist, verschwenkbar, in der der Riegel 6 außer Eingriff von den Rastzähnen 2 ist. Das Teil kann dann entlang der Führungsschiene 1 verstellt werden.

Bei einer solchen Einrichtung ist der Sicherheitsgurt mit einem Gurtstraffer kombiniert, mittels dessen der Gurt im Crashfall stramm angezogen wird.

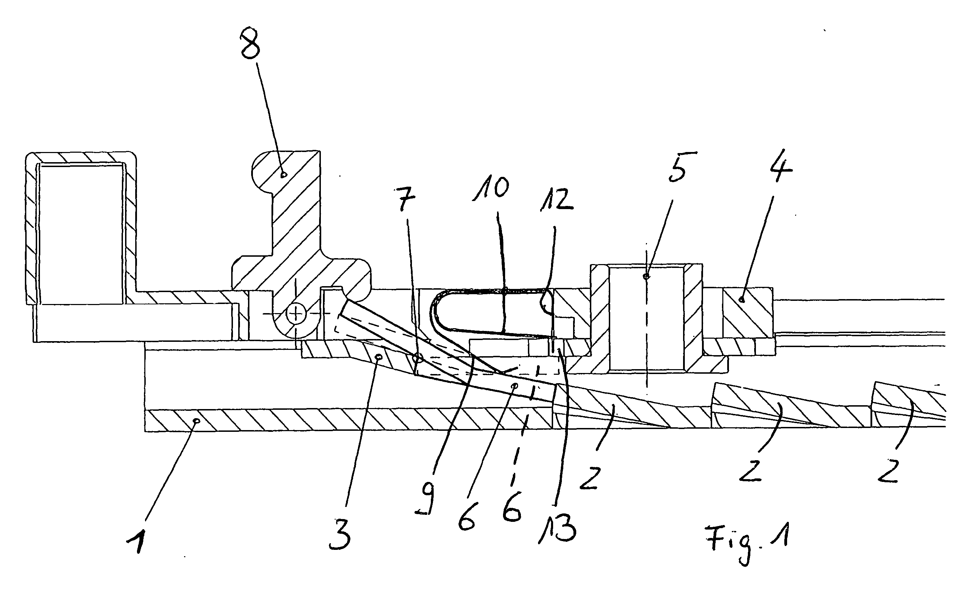

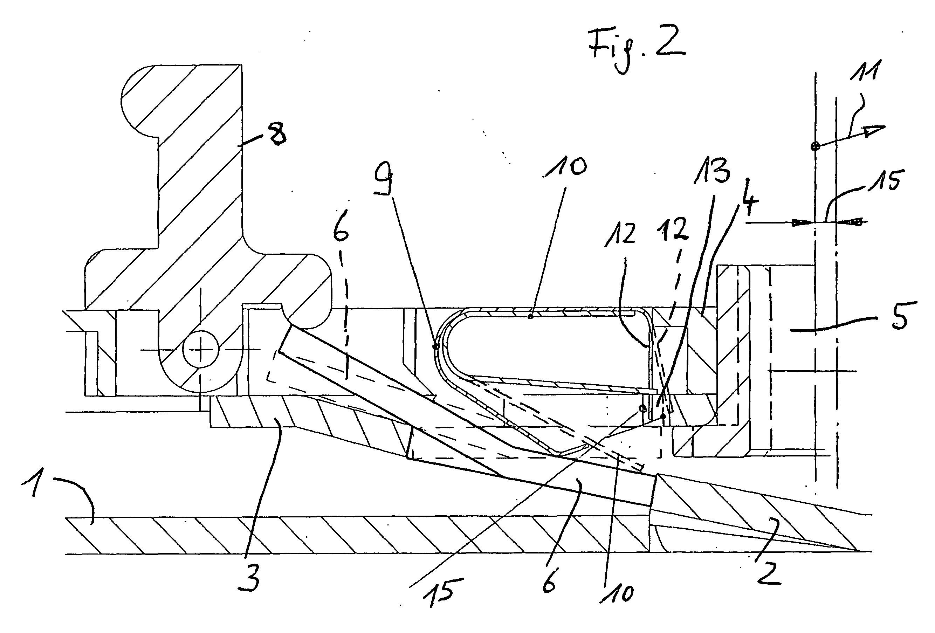

Am Schlittenoberteil 4 ist zusätzlich eine Strafferfeder 10 in vorgespannter Lage (siehe Figur 1) gehalten, die bei aktiviertem Gurtstraffer freigegeben ist und die Wirkung der Betätigungsfeder 9 unterstützend am Riegel 6 anliegt, wie in Figur 2 dargestellt. Diese Sicherheitslage ist in Figur 2 in gestrichelten Linienzügen gezeigt.

Die Strafferfeder 10 wird erfindungsgemäß durch eine vom aktivierten Gurtstraffer ausgelöste Verschiebebewegung des Verstellteiles 3 ausgelöst.

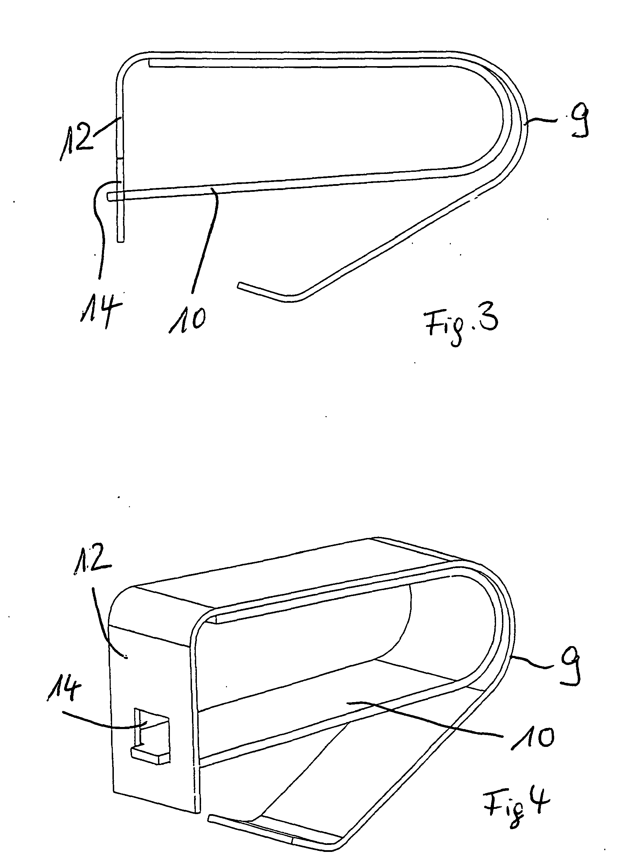

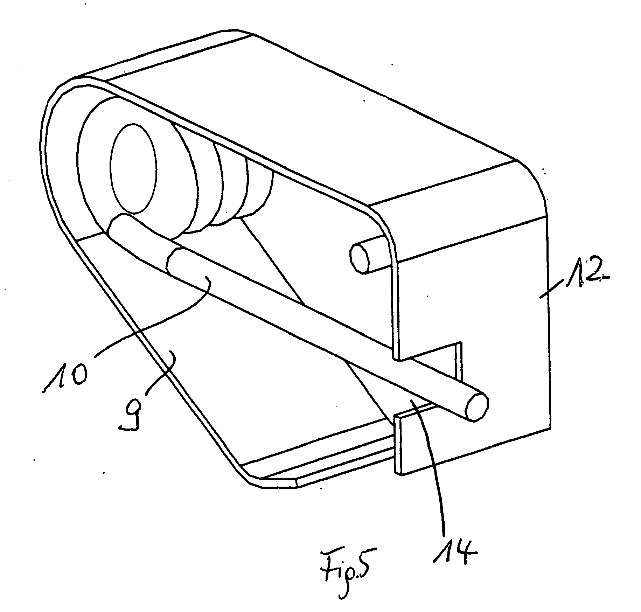

Die Betätigungsfeder 10 besteht aus einer etwa U-förmigen Blattfeder, deren freie Schenkelenden zur Halterung 5 für die Umlenköse gerichtet sind und deren Basis entgegen der Wirkrichtung des Gurtstraffers, die mit dem Pfeil 11 angegeben ist, zum Betätigungsteil 8 gerichtet ist. Der erste Schenkel der Betätigungsfeder, der in Figur 1 oben angeordnet ist, stützt sich an Bestandteilen des Schlittenoberteils 4 ab oder ist daran befestigt. Der zweite Schenkel, der in der Zeichnung nach unten gerichtet ist, stützt sich an dem Riegel 6 ab. Der erste Schenkel weist eine Verlängerung 12 auf, die zum Boden der Führungsschiene 1 zielend gerichtet ist und in einen Schlitz 13 des Verstellteiles 3 eingreift, der Mitnehmer 15 für die Verlängerung 12 aufweist. Die Strafferfeder 10 ist ein Federelement, welches zwischen den Schenkeln der Betätigungsfeder 9 angeordnet ist und sich mit einem ersten Endteil (in Figur 1 und 2 oben) an dem ersten Schenkel der Betätigungsfeder 9 abstützt oder daran befestigt ist. Der zweite Endteil greift in der Verriegelungslage gemäß Figur 1 beziehungsweise gemäß Figur 2 in durchgezogenen Linien, in einer Ausnehmung 14 der Verlängerung 13 des ersten Schenkels der Betätigungsfeder 9 ein und ist auf diese Weise vorgespannt gehalten. Das Verstellteil 3 ist samt Halterung 5 für die Umlenköse relativ zum Schlittenoberteil 4 in Wirkrichtung 11 des Gurtstraffers um ein solches Maß 16 verschieblich, dass bei aktiviertem Gurtstraffer die Mitnehmer 15 des Verstellteiles 3 die Verlängerung 12 des ersten Schenkels der Betätigungsfeder 9 in eine Lage überführen (in Figur 2 in gestrichelten Linien gezeigt), in der das zweite Endteil der Strafferfeder 10 von der Ausnehmung 14 freigegeben ist und sich an dem Riegel 6 unmittelbar oder an dem sich am Riegel 6 abstützenden zweiten Schenkel der Betätigungsfeder 9 unter Federlast abstützt. Wie aus dem Ausführungsbeispiel gemäß Figur 1 bis 4 ersichtlich, ist die Strafferfeder 10 eine U-förmige Blattfeder, die in gleicher Ausrichtung wie die Betätigungsfeder 9 zwischen deren Schenkel angeordnet ist. Wie im Ausführungsbeispiel gemäß Figur 5 gezeigt, kann die Strafferfeder 10 auch eine Schenkelfeder sein, deren Schenkel sich entsprechend an den korrespondierenden Teilen abstützen.

Vorzugsweise sind die Betätigungsfeder 9 und die Strafferfeder 10 zu einem einzigen Bauteil verbunden, welches vom Schlittenoberteil 4 in einer definierten Ausgangsposition gehalten ist. Beim normalen Betriebsfall, der in Figur 1 gezeigt ist, liegt der untere, frei bewegliche Federarm der Betätigungsfeder 9 auf dem Riegel 6 auf und drückt ihn in die Verrastung (2) der Führungsschiene 1. In der Betätigungsfeder 9 innenliegend ist die Strafferfeder 10 vorgespannt montiert. Im Falle der Gurtstrafferbetätigung wird über die als Bundmutter ausgebildete Halterung 5 schlagartig eine Zugkraft in den gesamten Schlitten eingeleitet. Dies ist in Figur 2 verdeutlicht. Dies führt dazu, dass die Bundmutter 5 und das Verstellteil 3 eine hohe Beschleunigung beziehungsweise Geschwindigkeit in sehr kurzer Zeit erfahren. Aufgrund des Verharrungsvermögens des Schlittenoberteiles 4 kommt es zu einer Relativbewegung (Verschiebung) zwischen dem Verstellteil 3 und dem Schlittenoberteil 4, wobei zwischen diesen Teilen ein entsprechendes Bewegungsspiel ermöglicht ist. Infolgedessen biegen die Mitnehmer 15 des Verstellteiles 3 den vertikalen Federarm 12 der Betätigungsfeder 9 auf, wodurch der im Wesentlichen horizontal ausgerichtete Federarm der Strafferfeder 10 freigegeben wird. (Die Angaben horizontal und vertikal beziehen sich auf die zeichnerische Darstellung, nicht aber auf die effektive Funktionslage im Kraftfahrzeug). Hierdurch kann die Strafferfeder 10 auf den Riegel 6 einwirken und mit ihrer Vorspannung die Betätigungsfeder 9 unterstützen, um das Einriegeln des Riegels 6 sicherzustellen.

Durch die Trennung der beiden Funktionen "Normalbetätigung" und "Strafferbetätigung" kann eine manuelle Entriegelung des Gurthöhenverstellers im eingebauten Zustand mit geringen Bedienkräften realisiert werden, was den Komfortwünschen der Kunden entspricht. Damit verbunden ist eine geringere Geräuschentwicklung bei der Betätigung, da auf den Riegel vergleichsweise kleine Kräfte einwirken. Auch die geforderte Einfingerbetätigung des Gurthöhenverstellers lässt sich besser abstimmen, da die Betätigungsfeder nicht zu stark dimensioniert werden muss, wie bei herkömmlicher Bauweise. Zudem ist bei der erfindungsgemäßen Lösung noch eine Notbetätigung möglich, da auch dann, wenn die Strafferfeder ausgelöst ist, die manuelle Entriegelung durch Bedienung des Betätigungsteiles 8 ermöglicht ist. Vorteilhaft ist zudem, dass die erforderlichen Federn fertigungstechnisch leicht und prozesssicher herstellbar sind.

Die Erfindung ist nicht auf das Ausführungsbeispiel beschränkt, sondern im Rahmen der Offenbarung vielfach variabel.

## Patentansprüche

1. Kombination aus Gurthöhenverstellteil und Gurtstraffer für Sicherheitsgurte für Kraftfahrzeuge, bestehend aus einer karosserieseitig befestigbaren Führungsschiene (1), die vorzugsweise C-förmigen Querschnitt aufweist, einem schlittenartig entlang der Schiene (1) rastend verstellbaren Verstellteil (3) und mit einem außen an der Schiene (1), deren Längsschlitz teilweise überdeckend angeordneten Schlittenoberteil (4), sowie einer am Verstellteil (3) fixierten Halterung (5) für eine Umlenköse für einen Sicherheitsgurt, wobei am Verstellteil (3) ein Riegel (6) schwenkbar gehaltert ist, der mittels eines am Schlittenoberteil (4) gehalterten Betätigungsteils (8) entgegen der Kraft einer am Schlittenoberteil (4) gehalterten Betätigungsfeder (9) aus der Verriegelungslage, in der der Riegel (6) an einem Rastzahn (2) der Führungsschiene (1) anliegt, in eine Verstelllage verschwenkbar ist, in der der Riegel (6) außer Eingriff vom Rastzahn (2) ist, und wobei der Sicherheitsgurt mittels des Gurtstraffers im Crash-Fall stramm gezogen wird, **dadurch gekennzeichnet, dass** am Schlittenoberteil (4) eine Strafferfeder (10) in vorgespannter Lage gehalten ist, die bei aktiviertem Gurtstraffer freigegeben ist und die Wirkung der Betätigungsfeder (9) unterstützend sich am Riegel (6) abstützt.

2. Kombination aus Gurthöhenverstellteil und Gurtstraffer nach Anspruch 1, **dadurch gekennzeichnet, dass** die Strafferfeder (10) durch eine vom aktivierten Gurtstraffer ausgelöste Verschiebebewegung des Verstellteils (3) auslösbar ist.

3. Kombination aus Gurthöhenverstellteil und Gurtstraffer nach Anspruch 1 oder 2, **dadurch gekennzeichnet, dass** die Betätigungsfeder (9) aus einer etwa U-förmigen Blattfeder besteht, deren freie Schenkelenden zur Halterung (5) für die Umlenköse gerichtet sind und deren Basis entgegen der Wirkrichtung (11) des Gurtstraffers zum Betätigungsteil (8) gerichtet ist, wobei deren erster Schenkel sich an Bestandteilen des Schlittenoberteils (4) abstützt oder daran befestigt ist und deren zweiter Schenkel sich an dem Riegel (6) abstützt, und wobei der erste Schenkel eine Verlängerung (12) aufweist, die zum Boden der Führungsschiene (1) hin zielend gerichtet ist und in einen Schlitz (13) des Verstellteils (3) eingreift, der Mitnehmer (15) für die Verlängerung (12) aufweist, dass die Strafferfeder (10) ein Federelement ist, das zwischen den Schenkeln der Betätigungsfeder (9) angeordnet ist und sich mit einem ersten Endteil an dem ersten Schenkel der Betätigungsfeder (9) abstützt oder daran befestigt ist, und mit einem zweiten Endteil in eine Ausnehmung (14) der Verlängerung (12) des ersten Schenkels der Betätigungsfeder (9) eingreift, und so vorgespannt gehalten ist, und dass das Verstellteil (3) samt Halterung (5) für die Umlenköse relativ zum Schlittenoberteil (4) in Wirkrichtung (11) des Gurtstraffers um ein solches Maß verschieblich ist, dass bei aktiviertem Gurtstraffer die Mitnehmer (15) des Verstellteiles (3) die Verlängerung (12) des ersten Schenkels in eine Lage überführen, in der das zweite Endteil der Strafferfeder (10) von der Ausnehmung (14) der Verlängerung (12) des ersten Schenkels der Betätigungsfeder (9) freigegeben ist und sich an dem Riegel (6) oder an dem am Riegel (6) sich abstützenden zweiten Schenkel der Betätigungsfeder (9) unter Federlast abstützt.

4. Kombination aus Gurthöhenverstellteil und Gurtstraffer nach Anspruch 3, **dadurch gekennzeichnet, dass** die Strafferfeder (10) eine U-förmige Blattfeder ist, die in gleicher Ausrichtung wie die Betätigungsfeder (9) zwischen deren Schenkeln angeordnet ist.

5. Kombination aus Gurthöhenverstellteil und Gurtstraffer nach Anspruch 3, **dadurch gekennzeichnet, dass** die Strafferfeder (10) eine Schenkelfeder ist.

## Claims

1. A combination consisting of a belt height adjustment element and a belt tensioner for seat belts for motor vehicles, consisting of a guide rail (1) that can be attached to the body and preferably has a C-shaped cross section, an adjustment element (3) that can move in latching fashion like a sliding carriage along the rail (1) and with a carriage upper element (4) that is disposed on the outside of the rail (1) and partly covers the longitudinal slot of said rail, and also a fitting (5) fixed to the adjustment element (3) for a deflection loop for a safety belt,
wherein a latch (6) is pivotally mounted on the adjustment element (3), which latch, by means of an operating element (8) mounted on the carriage upper part (4), can pivot against the force of an operating spring (9) mounted on the carriage upper part (4) out of the locking position, in which the latch (6) rests against a detent tooth (2) of the guide rail (1), into an adjustment position, in which the bolt (5) does not engage with the detent tooth (2), and
wherein the safety belt is tensioned by means of the belt tensioner in the event of a crash,
**characterised in that** a tensioning spring (10) is held on the carriage upper part (4) in the pretensioned position and is released when the seat belt tensioner is activated and is supported on the latch (6) in a manner supporting the action of the operating spring (9).

2. A combination consisting of a belt height adjustment element and a belt tensioner according to Claim 1,
**characterised in that** the tensioning spring (10) can be actuated by a displacement movement of the adjustment element (3) triggered by the activated belt tensioner.

3. A combination consisting of a belt height adjustment element and a belt tensioner according to Claim 1 or 2,
**characterised in that** the operating spring (9) consists of a roughly U-shaped flat spring, the free leg ends of which are directed towards the fitting (5) for the deflection loop and the base of which is directed against the effective direction (11) of the belt tensioner to the operating element (8), wherein its first leg is supported on components of the carriage upper part (4) or is fixed thereon and the second leg of which is supported on the latch (6), and wherein the first leg comprises a prolongation (12), which is directed to aim towards the bottom of the guide rail (1) and engages in a slot (13) in the adjustment element (3), which comprises drivers (15) for the prolongation (12),
**in that** the tensioning spring (10) is a spring element which is disposed between the legs of the operating spring (9) and is supported by a first end part on the first leg of the operating spring (9) or is attached thereto, and with a second end part engages in a recess (14) in the prolongation (12) of the first leg of the operating spring (9), and thus is held in the pretensioned state,
and **in that** the adjustment element (3) together with the fitting (5) for the deflection loop is displaceable relative to the carriage upper element (4) in the effective direction (11) of the belt tensioner by such an extent that when the belt tensioner is activated the drivers (15) of the adjustment element (3) transfer the prolongation (12) of the first leg into a position in which the second end part of the tensioning spring (10) is released from the recess (14) of the prolongation (12) of the first leg of the operating spring (9) and is supported on the latch (6) or on the second leg of the operating spring (9) supported on the latch (6) under spring load.

4. A combination consisting of a belt height adjustment element and a belt tensioner according to Claim 3,
**characterised in that** the tensioning spring (10) is a U-shaped flat spring which is disposed in the same alignment as the operating spring (9) between its legs.

5. A combination consisting of a belt height adjustment element and a belt tensioner according to Claim 3,
**characterised in that** the tensioning spring (10) is a leg spring.

## Revendications

1. Combinaison d'élément de réglage en hauteur de ceinture et de tendeur de ceinture pour des ceintures de sécurité pour véhicules automobiles, composée d'un rail de guidage (1) pouvant être fixé du côté de la carrosserie, qui présente de préférence une section transversale en forme de C, d'un élément de réglage (3) par enclenchement déplaçable comme un chariot le long du rail (1) et avec une partie supérieure de chariot (4) disposée à l'extérieur sur le rail (1) et recouvrant en partie sa fente longitudinale, ainsi que d'un support (5) fixé sur l'élément de réglage (3) pour un oeillet de déviation pour une ceinture de sécurité, un verrou (6) pouvant pivoter de la position de verrouillage dans laquelle le verrou (6) est en contact avec une dent d'enclenchement (2) du rail de guidage (1) contre la force d'un ressort d'actionnement (9) maintenu sur la partie supérieure du chariot (4) étant maintenu sur l'élément de réglage (3)de manière à pouvoir pivoter au moyen d'un élément d'actionnement (8) maintenu sur la partie supérieure du chariot (4)dans une position de réglage dans laquelle le verrou (6) n'est plus en prise avec la dent d'enclenchement (2) et la ceinture de sécurité étant tendue au moyen du tendeur de ceinture en cas d'accident, **caractérisée en ce que** sur la partie supérieure du chariot (4) un ressort de tendeur (10) qui est libéré lorsque le tendeur de ceinture est activé et s'appuie sur le verrou (6) pour soutenir l'action du ressort d'actionnement (9) est maintenu dans une position précontrainte.

2. Combinaison d'élément de réglage en hauteur de ceinture et de tendeur de ceinture selon la revendication 1, **caractérisée en ce que** le ressort de tendeur (10) peut être déclenché par un mouvement de déplacement de l'élément de réglage (3) déclenché par le tendeur de ceinture activé.

3. Combinaison d'élément de réglage en hauteur de ceinture et de tendeur de ceinture selon la revendication 1 ou 2, **caractérisée en ce que** le ressort d'actionnement (9) est composé d'un ressort à lames approximativement en forme de U, dont les extrémités de branches libres sont dirigées vers le support (5) de l'oeillet de déviation et dont la base est dirigée vers l'élément d'actionnement (8) inversement au sens d'action (11) du tendeur de ceinture, sa première branche s'appuyant sur des composants de la partie supérieure du chariot (4) ou y étant fixée et sa deuxième branche s'appuyant sur le verrou (6), et la première branche comportant un prolongement (12) dirigé de manière ciblée vers le fond du rail de guidage (1) et prenant prise dans une fente (13) de l'élément de réglage (3) qui comporte des dispositifs d'entraînement (15) pour le prolongement (12), **en ce que** le ressort de tendeur (10) est un élément à ressort disposé entre les branches du ressort d'actionnement (9) et s'appuie avec une première extrémité sur la première branche du ressort d'actionnement (9) ou y est fixé et prend prise avec une deuxième extrémité dans un évidement (14) du prolongement (12) de la première branche du ressort d'actionnement (9) et est ainsi maintenu de manière précontrainte, et **en ce que** l'élément de réglage (3) avec le support (5) pour l'oeillet de déviation peut être déplacé par rapport à la partie supérieure du chariot (4) dans le sens d'action (11) du tendeur de ceinture dans une mesure telle que, lorsque le tendeur de ceinture est activé, les dispositifs d'entraînement (15) de l'élément de réglage (3) mettent le prolongement (12) de la première branche dans une position dans laquelle la deuxième extrémité du ressort de tendeur (10) est libérée de l'évidement (14) du prolongement (12) de la première branche du ressort d'actionnement (9) et s'appuie sur le verrou (6) ou sur la deuxième branche du ressort d'actionnement (9) en appui sur le verrou (6) sous la charge du ressort.

4. Combinaison d'élément de réglage en hauteur de ceinture et de tendeur de ceinture selon la revendication 3, **caractérisée en ce que** le ressort de tendeur (10) est un ressort à lames en forme de U qui est disposé avec la même orientation que le ressort d'actionnement (9) entre les branches de ce dernier.

5. Combinaison d'élément de réglage en hauteur de ceinture et de tendeur de ceinture selon la revendication 3, **caractérisée en ce que** le ressort de tendeur (10) est un ressort à branches.
